# FASCICULE DE BREVET EUROPEEN

(11) **EP 1 921 522 B1**
(45) Date de publication et mention de la délivrance du brevet: **21.07.2010**
(21) Numéro de dépôt: 06123972.9
(22) Date de dépôt: 13.11.2006
(51) Int. Cl.: G04C 3/12, G04C 3/00, H02N 1/00

(54) **Agencement pour l'interfaçage mécanique d'un micromoteur MEMS avec une roue horlogère et pièce d'horlogerie comportant cet agencement**
Anordnung zur mechanischen Verbindung eines MEMS-Mikromotors mit einem Uhrrädchen und diese Anordnung umfassende Uhr
Arrangement for mechanical interface of an MEMS micromotor with a clock wheel and time piece incorporating this arrangement

(43) Date de publication de la demande: 14.05.2008
(73) Titulaire: ETA SA Manufacture Horlogère Suisse, 2540 Grenchen (CH)
(72) Inventeur: Paratte, Lionel, 2000, Neuchâtel (CH); Rebeaud, Jean-Phlippe, 2088, Cressier (CH); Zanetta, André, 2000, Neuchâtel (CH); Blondeau, Fabien, 2525, La Landeron (CH); Bisig, Martin, 4528, Zuchwil (CH); Meister, Pierre-André, 2502, Biel (CH); Golay, Nicolas, 2000, Neuchâtel (CH)
(74) Mandataire: Ravenel, Thierry Gérard Louis

(56) Documents cités:
- EP-A1- 0 403 179
- FR-A1- 2 874 907
- US-A1- 5 493 156
- US-A1- 5 959 376

## Description

La présente invention concerne un agencement pour l'interfaçage mécanique d'un micromoteur avec une roue et une pièce d'horlogerie comportant cet agencement.

L'invention concerne plus particulièrement un agencement pour l'interfaçage mécanique d'un micromoteur du type MEMS avec une roue dentée, dans lequel le micromoteur est réalisé dans la couche supérieure d'une plaque en matériau cristallin ou amorphe et comporte au moins un actionneur entraînant en rotation un rotor.

Dans les micro-actionneurs en silicium, un moyen de convertir l'énergie électrostatique en travail est de disposer de structures « en peigne », formées de doigts respectivement mobiles et fixes et mis à deux potentiels différents. Les doigts mobiles sont attachés aux peignes, eux-mêmes attachés à une nacelle guidée linéairement par des ressorts.. Ces actionneurs sont réalisés par photolithographie et attaque sèche par plasma de couches de silicium monocristallin ayant typiquement 50 à plus de 200 microns d'épaisseur.

Pour faire tourner une roue horlogère, il faut convertir le mouvement linéaire en mouvement rotatif, par un système de cliquets par exemple, comme dans le cas des montres Accutron de Bulova (USA), Mosaba de ETA ou par un système à hystérésis tel que décrit dans le document WO 2004/081695. Le mouvement linéaire sur silicium étant de l'ordre de quelques dizaines de micron, la roue dentée entraînée par les cliquets doit avoir des dents de dimensions équivalentes. Pour assurer un engrènement fiable, le positionnement de cette roue par rapport aux doigts mobiles doit être dans des tolérances bien inférieures aux quelques dizaines de microns avancés plus haut.

Pour réaliser un tel interfaçage mécanique entre le mouvement linéaire d'un actionneur à cliquet et le mouvement rotatif, le document WO 2006/024651 propose d'utiliser des micro-actionneurs qui entraînent, au moyen d'une dent à mouvement d'hystérésis, une roue micro-fabriquée à dents très petites, coaxiale et solidaire d'un pignon horloger. Cette solution implique un ajustement des micro-actionneurs par rapport à la roue pour chaque pièce assemblée, car la tolérance de positionnement radial d'un axe de rouage, par exemple un palier lisse en acier sur rubis, est de l'ordre de 40 microns. Une solution peut être d'intégrer un système de ressort sur le MEMS pour rattraper le jeu de positionnement, tel qu'un mécanisme de flexion des cliquets, ce qui est proposé dans le document WO 2006/97516. Le positionnement est alors assuré, mais les cliquets, ou tout autre mécanisme en silicium sont ainsi protubérants sur le côté du chip, ce qui rend la manipulation lors du montage plus difficile, ainsi que son exposition plus directe à la poussière.

Le document US5493156 décrit par ailleurs un micro-actuateur visant à transmettre la rotation d'un rotor à une roue dentée externe par l'intermédiaire d'une partie mobile passive entraînée en rotation par le rotor grâce à la coopération de protubérances dans des ouvertures du rotor. Cette solution requiert un alignement très précis de l'unité mobile passive sur le rotor, sans fournir aucun degré de liberté entre ces pièces. Ainsi les efforts exercés sur la roue dentée externe sont totalement repris par le micro-actuateur, ce qui peut être préjudiciable au bon fonctionnement de ce dernier.

L'invention vise à résoudre ces problèmes en proposant un agencement dans lequel le micro-actionneur entraîne un rotor silicium positionné sur le même substrat que le micro-actionneur. L'invention vise à rendre le micromoteur et le rouage indépendants au niveau de leurs jeux radiaux, tout en permettant une transmission du couple pur de l'un à l'autre.

Dans ce but, l'invention propose un agencement du type mentionné précédemment, caractérisé en ce qu'un pignon, coaxial au rotor et agencé au-dessus du rotor, est lié en rotation au rotor par l'intermédiaire d'au moins une goupille reçue dans un logement associé et en ce que le pignon engrène avec la roue dentée.

Selon d'autres caractéristiques de l'invention :
- le rotor comporte plusieurs logements qui sont répartis angulairement de manière régulière autour de l'axe de rotation, et les goupilles sont solidaires du pignon;
- les goupilles sont réalisées d'une seule pièce avec le pignon;
- chaque goupille est reçue dans le logement associé avec un jeu radial de fonctionnement et un jeu circonférentiel de fonctionnement déterminés par conception;
- la couche supérieure de la plaque comporte au moins une surface d'appui orientée vers le haut, et le pignon est prévu être en appui contre cette surface lorsqu'un effort axial orienté vers le bas est appliqué sur le pignon;
- le rotor est guidé en rotation par un arbre monté dans la plaque;
- le rotor est guidé en rotation par le même arbre que le pignon;
- le pignon engrène avec la roue dans une zone d'engrènement située à proximité d'un bord périphérique extérieur de la plaque;
- le rotor est entraîné en rotation par l'actionneur au moyen d'un cliquet, et la zone d'encliquetage est décalée angulairement par rapport à la zone d'engrènement;

L'invention propose aussi une pièce d'horlogerie comportant un agencement selon l'une des caractéristiques précédentes pour l'interfaçage mécanique d'une roue d'un rouage de la pièce d'horlogerie avec un micromoteur de la pièce d'horlogerie.

D'autres caractéristiques et avantages de la présente invention apparaîtront plus clairement à la lecture de la description détaillée qui suit, faite en référence aux dessins annexés donnés à titre d'exemple non limitatifs et dans lesquels :
- la figure 1 est une vue en coupe qui représente schématiquement une pièce d'horlogerie réalisée conformément aux enseignements de l'invention;
- la figure 2 est une vue en perspective qui représente partiellement le mouvement de la pièce d'horlogerie de la figure 1 équipé d'un module d'entraînement comportant un micromoteur MEMS;
- la figure 3 est une vue de dessus qui représente schématiquement le module d'entraînement de la figure 2;
- la figure 4 est une vue en perspective éclatée qui représente le module d'entraînement de la figure 2 et le boîtier enveloppant ce module d'entraînement;
- la figure 5 est une vue agrandie en coupe axiale suivant le plan 5-5 qui représente schématiquement une portion du module d'entraînement et qui illustre le montage à rotation d'un pignon et d'un rotor du micromoteur autour d'un arbre;
- la figure 6 est une vue en coupe axiale schématique suivant le plan X'X qui illustre l'entraînement du pignon par le rotor au moyen de goupilles;
- la figure 7 est une vue de dessus schématique qui illustre l'entraînement du pignon par le rotor au moyen de goupilles;
- la figure 8 est une vue en coupe axiale schématique suivant le plan X'X qui illustre une variante du montage de l'arbre par rapport au rotor;
- la figure 9 est une vue de dessous qui représente schématiquement les structures élastiques de fixation qui sont aménagées dans la plaque pour le serrage et le centrage de l'arbre selon le montage de la figure 8;
- la figure 10 est une vue de dessus qui représente schématiquement un wafer en silicium et qui illustre un exemple d'agencement de plusieurs micromoteurs sur le wafer.

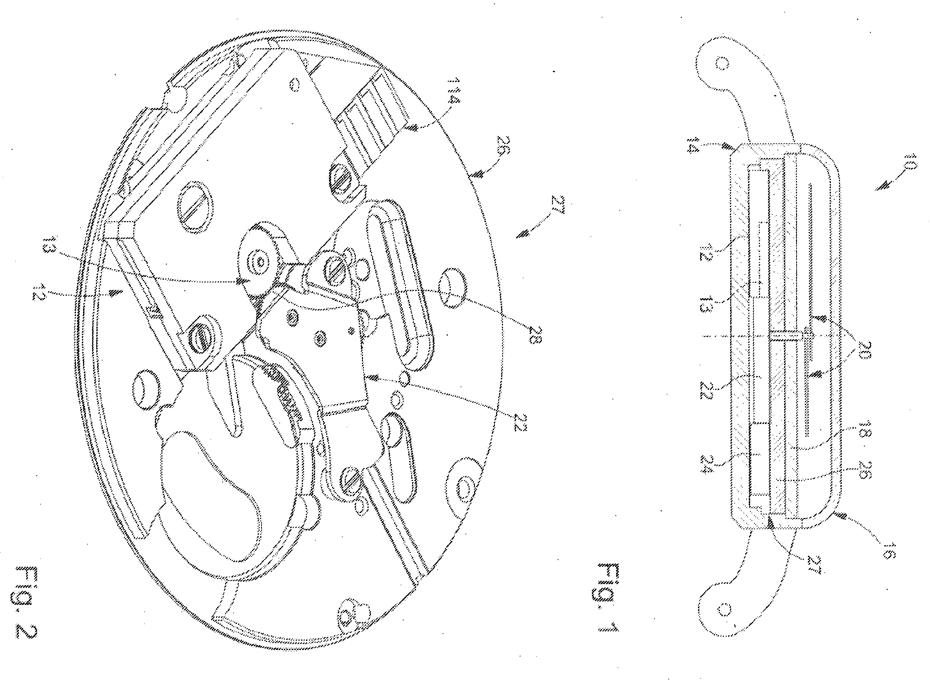

Sur la figure 1, on a représenté schématiquement une pièce d'horlogerie 10 constituée par une montre-bracelet équipée d'un module d'entraînement 13 conforme aux enseignements de l'invention, le module d'entraînement 13 étant ici agencé à l'intérieur d'un boîtier 12.

La pièce d'horlogerie 10 comporte une boîte de montre 14 fermée par une glace 16, un cadran 18, et des moyens d'affichage analogique constituées ici par des aiguilles 20. Les aiguilles 20 sont prévues pour être entraînées en rotation par le module d'entraînement 13 selon l'invention, via un rouage 22 comportant, par exemple, des moyens de démultiplication. Le module d'entraînement 13 est alimenté en énergie électrique par une pile 24. Le boîtier 12, le module d'entraînement 13, le rouage 22, et la pile 24 sont ici montés sur une platine 26 et forment ensemble le mouvement 27 de la pièce d'horlogerie 10, ce mouvement 27 étant fixé à l'intérieur de la boîte de montre 14. Bien entendu, le mouvement 27 comporte d'autres éléments (non représentés), en particulier un module électronique comportant un circuit intégré, une base de temps comportant un quartz, une plaque à circuits imprimés etc.

Sur la figure 2, on a représenté une partie du mouvement 27 de la pièce d'horlogerie 10, en particulier la platine 26 sur laquelle sont montés le boîtier 12 et le rouage 22.

Le module d'entraînement 13 est destiné à engrener avec une roue horlogère dite roue d'entrée 28 du rouage 22.

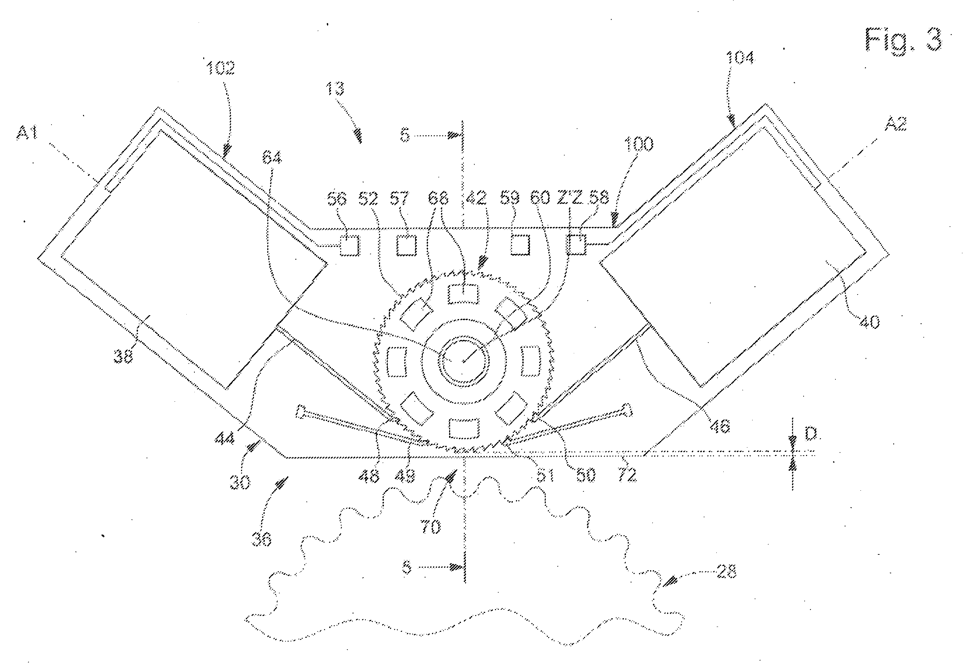

Les différents éléments du module d'entraînement 13 selon l'invention sont représentés plus en détail sur les figures 3 à 7.

Le module d'entraînement 13 comporte une plaque 30 en matériau cristallin ou amorphe, par exemple du silicium, comprenant une couche inférieure qui constitue un substrat 32, et une couche supérieure 34 dans laquelle est gravée un micromoteur 36 du type MEMS (Micro ElectroMechanical System). Le micromoteur 36 est constitué ici par deux actionneurs 38, 40 entraînant en rotation un rotor 42 gravé dans la couche supérieure 34.

Chaque actionneur 38, 40 comporte un stylet 44, 46 mobile suivant une direction A1, A2 parallèle au plan de la plaque 30. Chaque stylet 44, 46 est muni à son extrémité libre d'un cliquet 48, 50 prévu pour coopérer avec une denture 52 à dents de scie aménagée sur le bord périphérique extérieur du rotor 42 en vue de l'entraîner en rotation séquentiellement.

De préférence, chaque stylet 44, 46 s'étend suivant une direction A1, A2 qui coupe l'actionneur 38, 40 associé en deux parties globalement symétriques. De préférence, un premier actionneur 38 comporte un cliquet de poussée 48 et un second actionneur 40 comporte un cliquet de traction 50.

Chaque actionneur 38, 40 est ici du type électrostatique à peignes interdigités et réalisé par gravure dans la plaque 30 en silicium. La plaque 30 est ici du type Silicon On Insulator (SOI) et comprend une couche inférieure 32 épaisse de substrat en silicium, une couche intermédiaire 54 d'oxyde de silicium , et une couche supérieure 34 en silicium d'épaisseur inférieure au substrat 32.

La partie fixe de chaque actionneur 38, 40 comporte une plage 56, 58 d'alimentation prévue pour être raccordée électriquement au module électronique, et la partie mobile de chaque actionneur 38, 40 comporte une plage de contact 57, 59 qui place ces parties mobiles à un potentiel déterminé, ici à zéro Volts.

Un micromoteur comportant des actionneurs électrostatiques réalisés dans une plaque en silicium est décrit et représenté, par exemple, dans le document WO 2004/081695, incorporé ici par référence. Dans ce document, le moteur est réalisé par gravure dans une couche de silicium. Il comporte une roue d'entraînement dentée et des doigts d'actionnement qui coopèrent avec les dents de la roue pour provoquer sa rotation. Chaque doigt d'actionnement est solidaire en déplacement d'un peigne mobile qui se déplace par rapport à un peigne fixe en fonction d'une tension appliquée sur le peigne fixe.

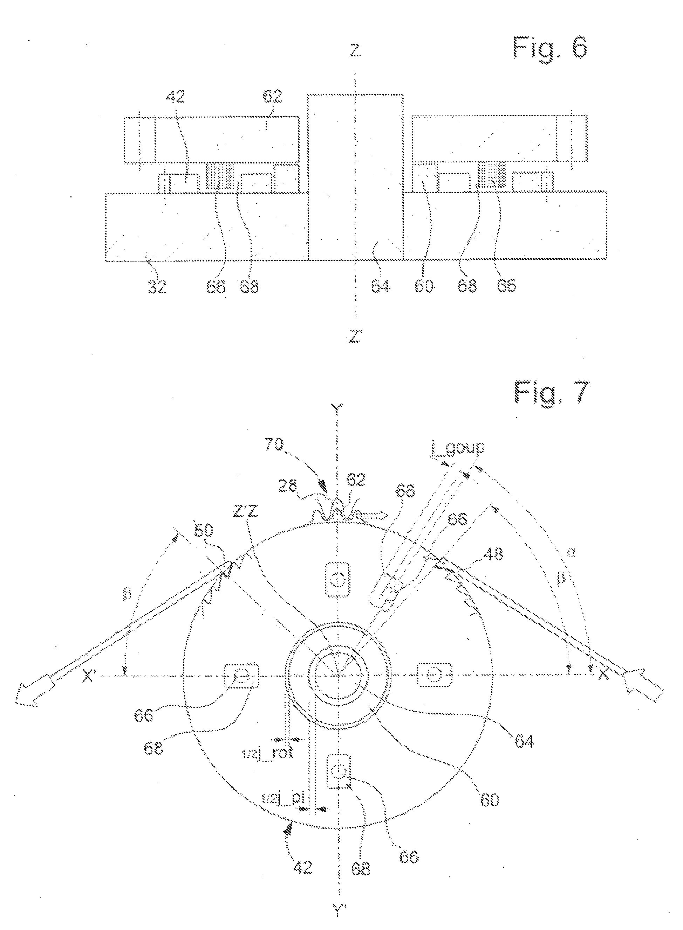

Un mode de réalisation utilisant une plaque SOI est décrit en référence aux figures 7A à 7D dans le document mentionné ci-dessus.

Selon un mode de réalisation avantageux, chaque actionneur 38, 40 est associé à un cliquet passif 49, 51 dont la zone d'encliquetage est située entre la zone d'engrènement 70 et la zone d'encliquetage du cliquet associé. Ces cliquets passifs 49, 51 sont maintenus élastiquement engrenés avec le rotor 42 de manière à assurer un positionnement angulaire précis, notamment au cours des phases d'entraînement, lorsque les autres cliquets 48, 50 se déplacent.

Selon le mode de réalisation représenté sur les figures 3 à 7, le rotor 42 est guidé par un palier 60 lisse central intégré ou cheminée, réalisé en même temps que les cliquets 48, 50, et ayant un jeu diamétral situé entre 4 et 10 microns, limite inférieure approximative correspondant à une couche de silicium épaisse de 80 microns. Les cliquets 48, 50 fonctionneront bien s'ils agissent sur une course tangentielle significativement supérieure à ce jeu, soit typiquement entre 20 et 100 microns. Ceci correspond bien à la gamme de courses possibles avec un guidage des stylets 44, 46 par ressorts de flexion (non représentés).

Le couple du rotor 42 est transmis à un pignon 62 par un système apparenté à une manivelle. Le pignon 62 situé juste au-dessus du rotor 42, est coaxial à ce dernier et il est guidé par un arbre 64 central. Le pignon 62 est doté de goupilles 66, engagées dans des fenêtres 68 du rotor 42. Des jeux de fonctionnement j_goup, j_rot, j_pi sont ménagés entre les divers éléments du rotor 42 et du pignon 62 comme représentés sur le schéma de la figure 7. Ainsi rotor 42 et pignon 62 sont couplés angulairement, mais indépendants latéralement : les jeux dans le plan xy sont repris par le palier 60 pour le rotor 42 et par l'arbre 64 pour le pignon 62. Ainsi la force de réaction latérale due à la charge n'est pas reprise par le palier 60 au niveau du rotor 42, mais par le guidage du pignon 62 par l'arbre 64. Ainsi les éléments microfabriqués du micromoteur 36 sont protégés des forces plus grandes exercées par les éléments horlogers, en cas de chocs par exemple.

Le pignon 62 est prévu pour engrener avec la roue d'entrée 28 du rouage 22 dans une zone d'engrènement 70 située à proximité d'un bord périphérique extérieur 72 de la plaque 30.

Selon une caractéristique avantageuse, le rotor 42 est agencé sur la plaque 30 de manière à minimiser la distance D entre la denture 52 du rotor 42 et le bord périphérique extérieur 72 de la plaque 30 correspondant à la zone d'engrènement 70. De plus, le diamètre extérieur du pignon 62 est légèrement supérieur à celui du rotor 42 de manière à être en porte-à-faux par rapport à la plaque 30 dans la zone d'engrènement 70.

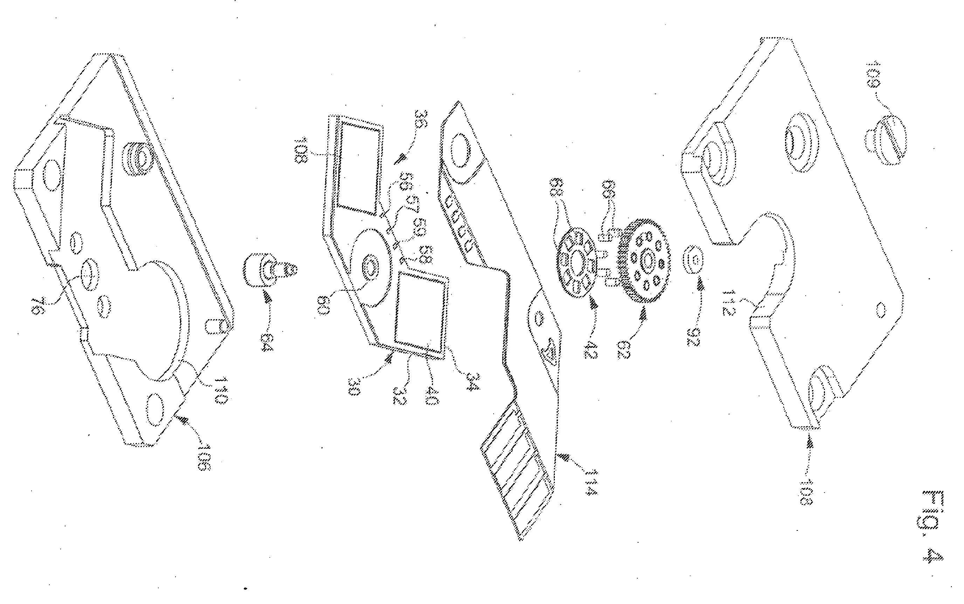

Pour simplifier le schéma de la figure 7, on a représenté un rotor 42 comportant seulement quatre fenêtres 68 et un pignon 62 comportant seulement quatre goupilles 66. Selon un mode de réalisation avantageux, tel qu'illustré notamment par les figures 3 et 4, il est prévu huit fenêtres 68 et huit goupilles 66.

Selon un mode de réalisation préféré, la position angulaire de la zone d'encliquetage de chaque cliquet 48, 50 avec le rotor 42 est décalée angulairement par rapport à la zone d'engrènement 70. La zone d'encliquetage de chaque cliquet 48, 50 forme un angle β avec l'axe x'x. α représente l'angle, à un instant donné, entre le rayon passant par la goupille 66 qui est en appui, en prise, contre le bord de sa fenêtre 68, et l'axe x'x (figure 7).

Ensuite, un choix judicieux de l'ensemble des paramètres {α, β, j_rot, j_pi, j_goup} pour des rayons de pignon 62, de rotor 42 et du cercle de goupilles 66 donnés favorisera le rendement de la transmission de l'énergie mécanique depuis le rotor 42 vers le pignon 62. Ainsi, pour un cas particulier de l'invention ayant β = 45°, si les jeux sont bien ajustés, le rendement pour un système à quatre goupilles avoisine les 85%, ce qui améliore le rendement par rapport à un cas où le rotor 42 et le pignon 62 sont collés l'un à l'autre. En effet, dans ce dernier cas toute la charge se retrouverait sous forme de frottement silicium-silicium latéral au niveau du palier 60, et vertical entre la périphérie du rotor 42 et le substrat 32 à cause du couple de basculement. Or le frottement silicium-silicium est plutôt défavorable, avec des coefficients secs statiques approchant 0,4.

Cette solution de transmission permet encore de varier le diamètre du pignon 62 afin d'adapter les couples et les vitesses, selon les charges. De plus, si le pignon 62 est assez grand et dépasse du bord périphérique 72 de la plaque 30, l'engrènement par la tranche s'en trouve simplifié, et le module d'entraînement 13 peut être assemblé sur la platine 26 de la pièce d'horlogerie 10 de façon modulaire, c'est-à-dire sans démonter/remonter la roue 28 entraînée.

Selon différentes variantes :
- le rotor 42 est microfabriqué en place, et sur le même substrat 32 que les actionneurs 38, 40, afin de garantir un appairage au palier 60 et aux cliquets;
- une autre variante consiste à fabriquer un rotor 42 séparément, sur le même wafer ou sur un autre wafer, ce rotor 42 étant ensuite assemblé sur la plaque 30 ou stator. Ceci permet une réduction du jeu radial si désiré dans le cas où le rotor est guidé par le palier 60;
- une famille de variantes est constituée par des rotors 42 et/ou des pignons 62 microfabriqués par d'autres procédés que l'usinage DRIE (découpe laser, EDM, LIGA, microinjection, etc.) puis assemblés sur la plaque 30 au stator;
- une autre famille de variantes est constituée de goupilles 66 formées par un deuxième niveau photolithographique dans le pignon 62 et/ou dans le rotor 42.

Le module d'entraînement 13 selon l'invention permet une modularité accrue pour l'adaptation à la charge, en permettant l'utilisation de pignons 62 de divers diamètres, sans modifier le reste du module 13. On obtient aussi une modularité accrue pour l'assemblage car l'interface mécanique pour la liaison au rouage 22 horloger est déjà existante grâce à la présence du pignon 62, intégré au module d'entraînement 13 et lié en rotation au micromoteur 36.

Le pignon 62 peut être réalisé en métal tel que du laiton, avec des goupilles 66 rapportées réalisées aussi en métal. Le pignon 62 peut aussi être réalisé d'une seule pièce avec les goupilles 66 par moulage en matériau plastique. Une réalisation du pignon 62 en matériau plastique avec des goupilles 66 métalliques surmoulées est aussi envisageable.

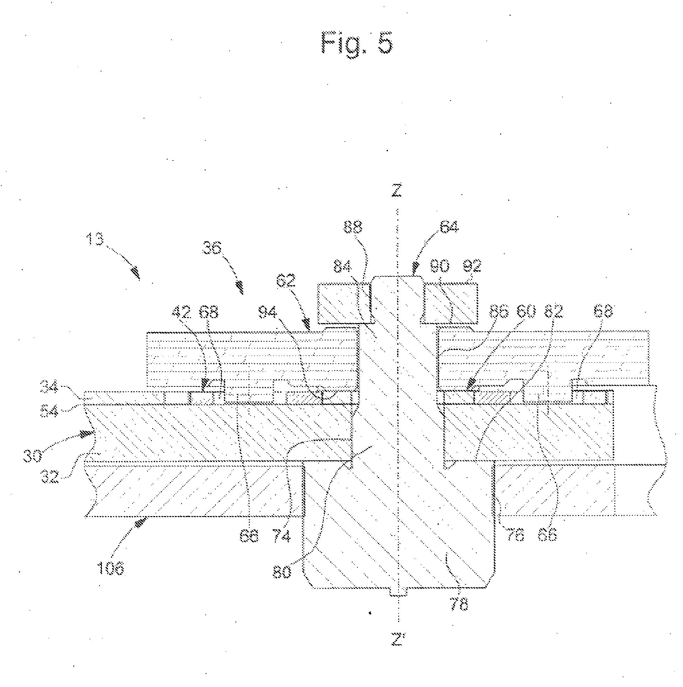

Selon le mode de réalisation représenté notamment sur les figures 4 et 5, l'axe de rotation du pignon 62 est constitué par un arbre 64 étagé en métal décolleté qui est inséré dans la plaque 30 à travers un premier trou 74 réalisé dans le substrat 32 et qui est chassé dans un second trou 76 réalisé dans une platine 106 du boîtier 12. Dans ce mode de réalisation, les efforts radiaux appliqués sur l'arbre 64 sont repris par la platine 106.

L'arbre 64 comporte un tronçon d'extrémité inférieure 78 qui délimite avec un tronçon intermédiaire inférieur 80 une première surface d'épaulement 82 orientée vers le haut et venant en butée axiale contre la face inférieure de la plaque 30. Le tronçon intermédiaire inférieur 80 a un diamètre sensiblement égal au diamètre du premier trou 74 et il s'étend dans ce trou 74. L'arbre comporte un tronçon intermédiaire supérieur 84 de diamètre légèrement inférieur au tronçon intermédiaire inférieur 80 adjacent et qui s'étend dans l'alésage 86 du pignon 62 pour le guider en rotation. Le tronçon intermédiaire supérieur 84 délimite avec le tronçon d'extrémité supérieure 88 une seconde surface d'épaulement 90 contre laquelle est maintenue en appui axial une bague de fixation 92 qui est chassée sur le tronçon d'extrémité supérieure 88.

Comme le guidage en rotation du rotor 42 est réalisé par le palier 60, qui est réalisé par un procédé photolithographique de gravure de la même manière que premier trou 74 qui détermine le centrage de l'arbre 64 par rapport au palier 60, on obtient un très bon centrage de l'arbre 64, du pignon 62, du palier 60 et du rotor 42.

De plus, la face inférieure du pignon 62 comporte, en vis-à-vis du palier 60, un bossage 94 qui empêche le pignon 62 de venir en appui axial contre le rotor 42, notamment en cas de basculement, ce qui évite une détérioration du rotor 42.

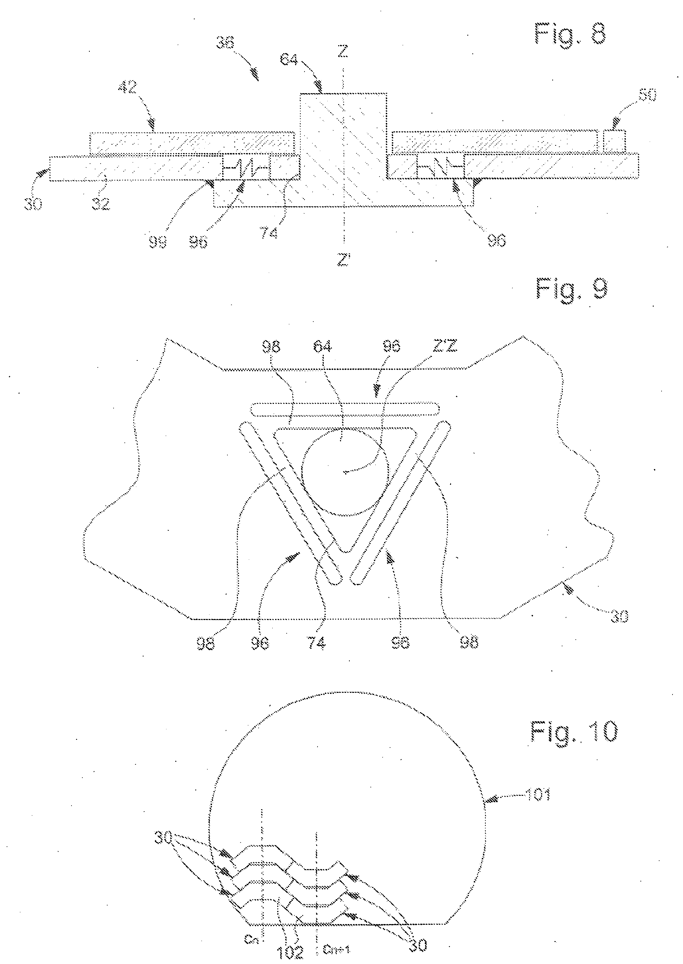

Sur les figures 8 et 9, on a représenté un autre mode de réalisation avantageux dans lequel l'arbre 64 est monté dans la plaque 30 à la manière d'un chassage au moyen de structures élastiques de fixation 96 aménagée dans le substrat 32 autour du premier trou 74. Dans ce mode de réalisation, les efforts radiaux appliqués sur l'arbre 64 sont repris par le substrat 32 et donc par les structures élastiques de fixation 96.

Les structures élastiques de fixation 96 sont constituées ici par des lames flexibles 98 lithographiées dans la face arrière de la plaque 30. La lithographie de la face avant, pour la couche supérieure 34 comportant les cliquets 48, 50 et le rotor 42, étant également alignée et centrée très précisément par rapport à la lithographie de la face arrière (erreur inférieure à 1 micron), il en résulte un guidage et un centrage plus précis qu'avec un axe réalisé d'une seul pièce avec la plaque 30, puisque le jeu radial peut être également réduit à un micron.

Grâce à cet alignement et ce centrage précis, il est possible de supprimer le palier 60 de sorte que le rotor 42 est alors guidé en rotation directement par l'arbre 64. Ainsi l'arbre 64 peut guider en rotation à la fois le rotor 42 et le pignon 62. Comme l'arbre 64 est réalisé par décolletage, ce qui permet d'obtenir des tolérances de fabrication très restreintes, on obtient un assemblage très précis, ce qui assure notamment un fonctionnement fiable des actionneurs 38, 40. Le rotor 42 est alors guidé par la paroi axiale externe de l'arbre 64.

L'arbre 64 peut être finalement fixé dans la plaque 30 par un moyen de fixation complémentaire, par exemple par soudage au substrat 32 au moyen d'un cordon de soudure 99 qui est représenté sur la figure 8, ou encore par collage.

Les problèmes de frottement contre l'arbre 64 peuvent être résolus par déposition d'une couche mince solide sur la paroi axiale externe de l'arbre 64 permettant de diminuer le frottement entre les pièces.

Les structures élastiques de fixation 96 peuvent être choisies notamment parmi les exemples décrits et représentés dans le document CH 695 395 ou parmi d'autres structures qui peuvent assurer un centrage précis et un serrage de l'arbre 64 sur la plaque 30, par exemple des structures constituées de languettes flexibles à extrémités libres.

Avantageusement, en considérant notamment la figure 3, les actionneurs 38, 40 décrivent entre eux un angle d'environ quatre-vingt-dix degrés, la bissectrice de cet angle passant par la zone d'engrènement 70 et par l'axe de rotation z'z du rotor 42, de sorte que le module d'entraînement 13 a une forme générale en "V" définie par le contour extérieur de la plaque 30, ce contour étant optimisé.

La plaque 30 comporte une portion centrale 100 qui porte le rotor 42 et deux portions latérales 102, 104. Le contour extérieur de la plaque 30 correspond globalement à l'intersection de deux rectangles, qui sont orthogonaux entre eux et qui forment les deux portions latérales 102, 104, avec un rectangle transversal, qui forme la portion centrale 100, le rectangle transversal décrivant un angle de quarante-cinq degrés par rapport à chacun des deux autres rectangles. La majeure partie de la surface de chaque portion latérale 102, 104 est occupée par un actionneur 38, 40 alors que la majeure partie de la surface de la portion centrale 100 est occupée par le rotor 42. La zone d'engrènement 70 est agencée à proximité d'un des bords périphériques 72 de la portion centrale 100.

De préférence, les plages 56, 57, 58, 59 sont agencées sur la portion centrale 100, du côté opposé à la zone d'engrènement 70 par rapport à l'axe z'z du rotor 42.

On note que la forme en "V" du module d'entraînement 13 présente l'avantage de permettre une optimisation du rendement du micromoteur 36 par rapport à la surface de la plaque 30 utilisée, et une optimisation de la surface de matériau cristallin ou amorphe utilisée pour réaliser les micromoteurs 36 et les modules d'entraînement 13. Ainsi, lorsque la plaque 30 est réalisée à partir d'un wafer 101 en silicium, comme schématisé sur la figure 10, la forme en "V" permet une réplication imbriquée des plaques 30 sur la surface du wafer pour maximiser le nombre de micromoteurs 36 obtenus à partir d'une surface donnée de silicium. En particulier, selon l'exemple représenté sur la figure 10, les plaques 30 peuvent être rangées sur le wafer en colonnes parallèles à la manière de chevrons, deux colonnes Cn, Cn+1 adjacentes étant orientées dans des sens opposés. De plus, deux plaques 30 adjacentes de deux colonnes Cn, Cn+1 adjacentes ont leurs portions latérales 102 adjacentes qui sont alignées.

De préférence, l'angle décrit par les deux actionneurs 38, 40 est compris entre quatre-vingt-dix et cent quarante degrés. Plus l'angle est important, plus l'imbrication des plaques 30 sur le wafer 101 est optimisée, mais les angles importants nécessitent de déporter les stylets 44, 46 des actionneurs 38, 40 par rapport à leurs axes de symétrie A1, A2 respectifs, ce qui pénalise l'efficacité mécanique des actionneurs 38, 40.

Selon le mode de réalisation représenté sur les figures, le boîtier 12 qui contient le module d'entraînement 13 comporte une platine inférieure 106 prévue pour être fixée sur un élément de la pièce d'horlogerie 10, ici sur la platine 26 du mouvement, et la plaque 30 du module d'entraînement 13 est montée sur la platine inférieure 106. Le boîtier 12 comporte un capot 108 de protection qui recouvre le module d'entraînement 13, qui est fixé sur la platine inférieure 106, ici au moyen d'une vis 109, et qui retient le module d'entraînement 13 contre la platine inférieure 106.

La face supérieure de la platine inférieure 106 comporte ici une creusure ou logement 110 dans lequel la plaque 30 du module d'entraînement 13 est reçue de manière sensiblement complémentaire.

Le capot 108 comporte une échancrure 112 ouverte dans un de ses bords périphériques extérieurs et le pignon 62 est logé dans cette échancrure 112 après montage du capot 108 sur la platine inférieure 106.

Avantageusement, un circuit imprimé 114 est intercalé entre la platine inférieure 106 et le capot 108 pour permettre le raccordement électrique du micromoteur 36, par ses plages 56, 57, 58, 59, au module électronique de la pièce d'horlogerie 10.

Selon une variante de réalisation (non représentée), le module d'entraînement 13 peut être monté directement sur la platine 26, ce qui permet de supprimer le boîtier 12, notamment pour minimiser le nombre de composants, pour faciliter l'assemblage du mouvement 27, et pour minimiser l'encombrement des moyens d'entraînement. Un élément de protection peut être prévu sur le module d'entraînement 13 pour protéger ses composants.

## Revendications

1. Agencement pour l'interfaçage mécanique d'un micromoteur (36) du type MEMS avec une roue horlogère dentée (28), dans lequel le micromoteur (36) est réalisé dans la couche supérieure d'une plaque (30) en matériau cristallin ou amorphe et comporte au moins un actionneur (38, 40) entraînant en rotation un rotor (42), un pignon (62), coaxial au rotor (42) et agencé au-dessus du rotor (42), est lié en rotation au rotor (42) par l'intermédiaire d'au moins une goupille (66) reçue dans un logement (68) associé, **caractérisé en ce que** le pignon (62) est apte à engréner avec la roue horlogère dentée (28), des jeux de fonctionnement étant ménagés entre les différents éléments dudit rotor (42) et dudit pignon (62) de telle sorte que ledit rotor (42) et ledit pignon (62) soient couplés angulairement, mais indépendants latéralement.

2. Agencement selon la revendication précédente, **caractérisé en ce que** le rotor (42) comporte plusieurs logements (68) qui sont répartis angulairement de manière régulière autour de l'axe de rotation, et **en ce que** les goupilles (66) sont solidaires du pignon (62).

3. Agencement selon la revendication précédente, **caractérisé en ce que** les goupilles (66) sont réalisées d'une seule pièce avec le pignon (62).

4. Agencement selon l'une quelconque des revendications précédentes, **caractérisé en ce que** chaque goupille (66) est reçue dans le logement (68) associé avec un jeu radial de fonctionnement et un jeu circonférentiel de fonctionnement déterminés par conception.

5. Agencement selon l'une quelconque des revendications précédentes, **caractérisé en ce que** la couche supérieure (34) de la plaque (30) comporte au moins une surface d'appui (60) orientée vers le haut, et **en ce que** le pignon (62) est prévu être en appui contre cette surface (60) lorsqu'un effort axial orienté vers le bas est appliqué sur le pignon (62).

6. Agencement selon l'une quelconque des revendications précédentes, **caractérisé en ce que** le rotor (42) est guidé en rotation par un arbre (64) monté dans la plaque (30).

7. Agencement selon la revendication précédente, **caractérisé en ce que** le rotor (42) est guidé en rotation par le même arbre (64) que le pignon (62).

8. Agencement selon l'une quelconque des revendications précédentes, **caractérisé en ce que** le pignon (62) engrène avec la roue (28) dans une zone d'engrènement (70) située à proximité d'un bord périphérique extérieur, (72) de la plaque (30).

9. Agencement selon la revendication précédente, **caractérisé en ce que** le rotor (42) est entraîné en rotation par l'actionneur (38, 40) au moyen d'un cliquet (48, 50), et **en ce que** la zone d'encliquetage est décalée angulairement par rapport à la zone d'engrènement (70).

10. Agencement selon l'une quelconque des revendications précédentes, **caractérisé en ce que** le logement (68) est constitué par une lumière (68).

11. Pièce d'horlogerie (10) comportant un agencement selon l'une quelconque des revendications précédentes pour l'interfaçage mécanique d'une roue (28) d'un rouage (22) de la pièce d'horlogerie (10) avec un micromoteur (36) de la pièce d'horlogerie (10).

## Claims

1. Arrangement for the mechanical interfacing of a micromotor (36) of the MEMS type with a toothed wheel (28) in which the micromotor (36) is produced in the upper layer of a plate (30) made of crystalline or amorphous material and comprises at least one linear actuator (38, 40) which drives a rotor (42) in rotation, a pinion (62), coaxial with the rotor (42) and arranged above the rotor (42), is connected in rotation to the rotor (42) by means of at least one pin (66) which is received in an associated housing (68), **characterised in that** the pinion (62) is able to mesh with the toothed wheel (28), wherein operating clearances are provided between the various elements of the rotor (42) and the pinion (62) so that said rotor (42) and said pinion (62) are coupled angularly, but independent laterally.

2. Arrangement according to claim 1, **characterised in that** the rotor (42) comprises a plurality of housings (68) which are distributed angularly in a regular manner about the axis of rotation and **in that** the pins (66) are integral with the pinion (62).

3. Arrangement according to claim 1, **characterised in that** the pins (66) are produced in a single piece with the pinion (62).

4. Arrangement according to claim 1, **characterised in that** each pin (66) is received in the associated housing (68) with a radial functioning clearance and a circumferential functional clearance determined by design.

5. Arrangement according to claim 1, **characterised in that** the upper layer (34) of the plate (30) comprises at least one support surface (60) orientated towards the top and **in that** the pinion (62) is provided to abut against this surface (60) when an axial force orientated towards the bottom is applied to the pinion (62).

6. Arrangement according to claim 1, **characterised in that** the rotor (42) is guided in rotation by a shaft (64) mounted in the plate (30).

7. Arrangement according to claim 6, **characterised in that** the rotor (42) is guided in rotation by the same shaft (64) as the pinion (62).

8. Arrangement according to claim 1, **characterised in that** the pinion (62) meshes with the wheel (28) in a meshing zone (70) situated close to an exterior circumferential edge (72) of the plate (30).

9. Arrangement according to claim 8, **characterised in that** the rotor (42) is driven in rotation by the actuator (38, 40) by means of a pawl (48, 50) and **in that** the ratcheting zone is offset angularly relative to the meshing zone (70).

10. Arrangement according to claim 1, **characterised in that** the housing (68) is formed by a slot (68).

11. Timepiece (10) comprising an arrangement according to claim 1 for the mechanical interfacing of a wheel (28) of a gear-train (22) of the timepiece (10) with a micromotor (36) of the timepiece (10).

## Patentansprüche

1. Anordnung zur mechanischen Verbindung eines MEMS-Mikromotors mit einem Uhrzahnrad (28), in welcher der Mikromotor (36) in der oberen Schicht einer aus kristallinem bzw. amorphem Material bestehenden Platte (30) ausgebildet ist, und wenigstens ein Betätigungsglied (38,40) aufweist, das einen Rotor (42) drehend antreibt, wobei ein koaxial zum Rotor (42) verlaufendes Ritzel (62) oberhalb des Rotors angeordnet ist, und durch mindestens einen in einer entsprechenden Behausung (68) untergebrachten Stift (66) drehfest mit dem Rotor verbunden ist, **dadurch gekennzeichnet, dass** das Ritzel (62) mit dem Uhraahnrad kämmt, wobei Spiel im Betrieb zwischen den verschiedenen Elementen des besagten Rotors (42) und Ritzels (62) eingearbeitet ist, so dass der besagte Rotor (42) und das besagte Ritzel (62) drehend gekoppelt sind, dabei jedoch in der Längsrichtung unabhängig sind.

2. Anordnung gemäss dem vorigen Anspruch, **dadurch gekennzeichnet, dass** der Rotor (42) mehrere Behausungen (68) aufweist, die mit einer regelmässigen Winkelstellung um die Drehachse aufgeteilt sind, und dass die Stifte (66) zusammenhaltend mit dem Ritzel (62) ausgebildet sind.

3. Anordnung gemäss dem vorigen Anspruch, **dadurch gekennzeichnet, dass** dass die Stifte (66) einstückig mit dem Ritzel (62) ausgebildet sind.

4. Anordnung gemäss einem der vorigen Ansprüche, **dadurch gekennzeichnet, dass** jeder Stift (66) in die entsprechende Behausung (68) mit radialem Spiel und Spiel in Umfangsrichtung untergebracht ist, die durch den Aufbau bestimmt sind.

5. Anordnung gemäss einem der vorigen Ansprüche, **dadurch gekennzeichnet, dass** die obere Schicht (34) der Platte (30) wenigstens eine nach oben orientierte Abstützfläche (60) aufweist, und dass das Ritzel (62) dafür vorgesehen ist, gegen diese Abstützfläche abgestützt zu werden, wenn eine nach unten orientierte Kraft auf das Ritzel (62) aufgebracht wird.

6. Anordnung gemäss einem der vorigen Ansprüchen, **dadurch gekennzeichnet, dass** der Rotor (42) durch eine in der Platte (30) montierte Welle (64) drehend angetrieben ist.

7. Anordnung gemäss dem vorigen Anspruch, **dadurch gekennzeichnet, dass** der Rotor (42) durch die gleiche Welle (64) wie das Ritzel (62) drehend angetrieben ist.

8. Anordnung gemäss einem der vorigen Ansprüchen, **dadurch gekennzeichnet, dass** das Ritzel (62) mit dem Uhrenrad (28) in einem Kämmbereich (70) kämmt, der nahe einem äusseren Umfangsrand (72) der Platte (30) liegt.

9. Anordnung gemäss dem vorigen Anspruch, **dadurch gekennzeichnet, dass** der Rotor (42) durch das Betätigungsglied (38,40) mittels einer Sperrklinke (48,50) drehend angetrieben wird, und dass die Winkelstellung des Einrastbereichs der Sperrklinke mit dem Rotor im Winkel geringfügig versetzt zum Kämmbereich (70) liegt.

10. Anordnung gemäss einem der vorigen Ansprüche, **dadurch gekennzeichnet, dass** die Behausung in einem Fenster (68) besteht.

11. Uhr (10) umfassend eine Anordnung gemäss einem der vorigen Ansprüchen zur mechanischen Verbindung eines Rads (26) eines Räderwerks (22) der besagten Uhr (10) mit einem Mikromotor (36) der besagten Uhr (10).
